# FASCICULE DE BREVET EUROPEEN

(11) **EP 1 605 195 B1**
(45) Date de publication et mention de la délivrance du brevet: **31.01.2007**
(21) Numéro de dépôt: 05291095.7
(22) Date de dépôt: 20.05.2005
(51) Int. Cl.: F16L 19/08

(54) **Système de raccordement de pièce(s) tubulaire(s) et son procédé de montage**
Rohrkupplungssystem und dazu gehöriges Montageverfahren
Pipe coupling system and associated method of assembly

(30) Priorité: 09.06.2004 FR 0406224
(43) Date de publication de la demande: 14.12.2005
(73) Titulaire: SNFBO, 52260 Rolampont (FR)
(72) Inventeur: Chevrier, Pascal, 40190 Sainte-Foy (FR)
(74) Mandataire: Laget, Jean-Loup

(56) Documents cités:
- EP-A- 0 034 101
- EP-A- 1 063 463
- FR-A- 2 847 962
- GB-A- 2 002 079

## Description

La présente invention concerne un système de raccordement destiné à raccorder au moins une pièce tubulaire. Cette pièce tubulaire peut être une conduite rigide (constituée d'acier inoxydable ou d'un autre métal) ou une conduite souple (constituée de caoutchouc ou de matière thermoplastique). Ladite pièce tubulaire peut être raccordée, par le système de raccordement, à une autre pièce tubulaire ou à une installation souple ou mobile. La présente invention concerne également un procédé de montage d'un système de raccordement selon l'invention.

On connaît notamment par le brevet FR 1 302 363 un raccord pour tuyauteries rigides qui comporte un corps qui, pour chaque extrémité de tuyauterie à raccorder, coopère avec un joint torique plastique préalablement monté en contact frottant sur l'extrémité correspondante de la tuyauterie, une rondelle de protection, un jonc rond ouvert en acier et un écrou ou une bride de serrage présentant une partie interne qui s'appuie sur la surface extérieure du jonc rond ouvert. Dans cette réalisation, le corps du raccord comporte à chaque extrémité un logement, qui vient se placer autour du joint torique plastique, et la rondelle de protection vient, au serrage, en butée sur l'extrémité du corps. Ce type de raccord permet la solidarisation mécanique des tuyauteries qui peuvent présenter un diamètre légèrement variable.

Cependant, ce type de raccord ne présente pas une étanchéité satisfaisante, notamment dans des domaines de pression élevée.

Le brevet FR 2 177 123 a par la suite tenté de remédier à ce problème d'étanchéité par la réalisation d'un raccord présentant en outre une bague en matériau malléable interposée entre le joint et la rondelle de protection.

Cependant, même si l'étanchéité à forte pression est davantage satisfaisante, ce type de raccord, comme le précédent, nécessitent d'être désassemblés entièrement avant d'être montés sur les tuyaux. Ce type de raccord impose de monter d'abord l'écrou, la bague fendue et la rondelle sur la tuyauterie puis le joint sur la tuyauterie contre laquelle frotte le joint, et enfin le corps qui vient se visser dans l'écrou en prenant en sandwich les autres composants.

Cette caractéristique implique un temps de montage conséquent ainsi qu'un risque éventuel de perte des éléments composant le raccord.

Le brevet FR 2847962 décrit un raccord ayant les caractéristiques techniques du préambule de la revendication 1.

L'invention a pour but de proposer un nouveau système de raccordement qui évite les inconvénients précités et qui permette un raccordement étanche et un assemblage rapide, sans outillage spécifique, sur la (les) pièce(s) tubulaire(s) à raccorder.

A cet effet, l'invention a pour objet un système de raccordement destiné à raccorder au moins une pièce tubulaire, ayant les caractéristiques de la revendication 1.

Le diamètre interne minimal du corps est supérieur ou égal au diamètre interne minimal du joint d'étanchéité qui est lui même supérieur ou égal au diamètre interne minimal de la rondelle.

Ainsi, du fait que le diamètre interne dudit joint d'étanchéité est supérieur au diamètre interne minimal de la rondelle et donc au diamètre maximal externe des pièces tubulaires, le joint d'étanchéité, au repos, peut aisément glisser le long des pièces tubulaires. Cette caractéristique permet un montage facilité du système de raccordement, sans désassemblage dudit système, par simple glissement le long de la surface externe des pièces tubulaires.

En outre, du fait que le diamètre interne dudit joint d'étanchéité est inférieur au diamètre interne minimal dudit corps, lors du serrage axial du système de raccordement, le fluage dudit joint d'étanchéité s'oriente plutôt en direction de l'alésage dudit corps qu'en direction de ladite rondelle. Ainsi, une meilleure étanchéité est conférée au système.

Ledit logement interne dudit corps comporte, dans la direction axiale, une première portion interne formant le fond du logement interne qui se prolonge en une deuxième portion externe évasée de préférence conique.

La portion externe évasée permet le guidage du joint d'étanchéité dans le logement interne et le fluage préférentiellement dans la direction de l'épaulement annulaire et la surface externe de la pièce tubulaire.

Avantageusement, ledit joint d'étanchéité présente un diamètre externe maximal au plus égal au diamètre maximal dudit logement interne.

L'épaisseur axiale dudit joint d'étanchéité est supérieure à la profondeur axiale dudit logement interne du corps tubulaire. Du fait de cette caractéristique, le joint d'étanchéité est contraint, après serrage axial, de se déformer et de fluer contre la surface externe des pièces tubulaires et contre l'épaulement annulaire. Cette particularité confère une étanchéité accrue au système de raccordement.

Avantageusement, le corps tubulaire comporte un plan médian transversal de symétrie et deux joints d'étanchéité, et deux rondelles d'appui, deux bagues fendues et deux écrous sont disposés symétriquement par rapport audit plan de symétrie, permettant de raccorder deux pièces tubulaires.

Selon un mode de réalisation préféré, ledit corps tubulaire et/ou ladite bague fendue et/ou ledit écrou sont constitués d'acier inoxydable. L'utilisation d'acier inoxydable confère à ces éléments une plus grande solidité et une plus grande résistance mécanique notamment du filetage, du taraudage et des moyens de préhension des éléments.

Selon un mode réalisation particulier, ledit joint d'étanchéité présente une dureté comprise entre 75 et 85 shore A et de préférence égale à 80 shore A. Cette dureté confère au joint d'étanchéité des propriétés de fluage optimales pour une meilleure étanchéification du système de raccordement.

Préférentiellement, ledit joint d'étanchéité est constitué d'un élastomère synthétique.

De manière avantageuse, la surface radialement externe du corps tubulaire et/ou des écrous présente des moyens de préhension. Ces moyens de préhension permettent à l'utilisateur d'effectuer un serrage plus intense de l'écrou sur le corps afin d'augmenter l'étanchéité du système de raccordement.

Selon un certain mode de réalisation, les différents éléments dudit système, dont ledit corps, ledit (lesdits) joint(s) d'étanchéité, ladite (lesdites) rondelle(s) d'appui, ladite (lesdites) bague(s) fendue(s) et ledit (lesdits) écrou(s), sont pré-assemblés. Le système ainsi pré-assemblé peut ainsi être directement monté sur une pièce tubulaire, sans désassemblage-réassemblage préalable des différents éléments. Cette caractéristique permet à l'utilisateur d'éviter le risque d'effectuer un assemblage impropre du système de raccordement ou de perdre certains éléments du système. Il permet également un gain de temps à l'utilisateur qui ne doit plus monter le système sur les pièces tubulaires élément par élément.

Avantageusement, dans cet état pré-assemblé, la partie radialement interne formant came dudit écrou, ladite bague fendue, ladite rondelle d'appui, ledit joint d'étanchéité et ledit corps sont successivement disposés, selon une direction axiale vers l'intérieur, en appui les uns contre les autres, ladite rondelle d'appui n'étant pas en appui contre l'extrémité dudit corps.

L'invention a également pour objet un procédé de montage d'un système de raccordement selon l'invention, caractérisé en ce qu'il consiste à :
- glisser le système de raccordement pré-assemblé le long de la surface externe de chaque pièce tubulaire à raccorder ;
- serrer chaque écrou de façon que sa partie radialement interne formant came repousse axialement ledit joint d'étanchéité dans le logement interne jusqu'à provoquer une déformation radiale dudit joint d'étanchéité afin que ledit joint d'étanchéité soit en appui contre la surface externe de ladite pièce tubulaire ;
- poursuivre le serrage de l'écrou de façon que sa partie radialement interne formant came glisse sur ladite bague fendue jusqu'à provoquer son rétrécissement radial afin qu'elle vienne en appui
contre la surface externe de ladite pièce tubulaire.

Au contraire, dans l'art antérieur, le joint d'étanchéité a un diamètre interne inférieur au diamètre externe de la tuyauterie à raccorder afin d'assurer une bonne étanchéité, ce qui impose de monter d'abord l'écrou, la bague fendue et la rondelle sur la tuyauterie puis le joint sur la tuyauterie contre laquelle frotte le joint, et enfin le corps qui vient se visser dans l'écrou en prenant en sandwich les autres composants.

Le rétrécissement radial de la bague fendue permet, outre une meilleure étanchéification du système, une solidarisation mécanique du système sur les pièces tubulaires à raccorder.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue longitudinale en demi-coupe du système de raccordement selon l'invention à l'état pré-assemblé ;
- la figure 2 est une vue agrandie de la zone II de la figure 1, avec le système de raccordement monté sur une pièce tubulaire ;
- la figure 3 est une vue longitudinale en demi-coupe du système de raccordement monté sur deux pièces tubulaires après serrage axial et
- la figure 4 est une vue agrandie de la zone IV de la figure 3.
Dans la description détaillée qui va suivre, les termes « interne » et « intérieur » utilisés indépendamment d'un autre qualificatif signifient « axialement en direction du centre du corps ». De même, les termes « externe » et « extérieur » utilisés indépendamment d'un autre qualificatif signifient « axialement en direction des extrémités du corps ». En outre, les termes « longitudinal » et « transversal » sont définis par rapport à l'axe de révolution A du corps. De plus, le terme « diamètre externe de ladite pièce tubulaire » peut également être considéré comme le « diamètre externe maximal de ladite pièce tubulaire ».

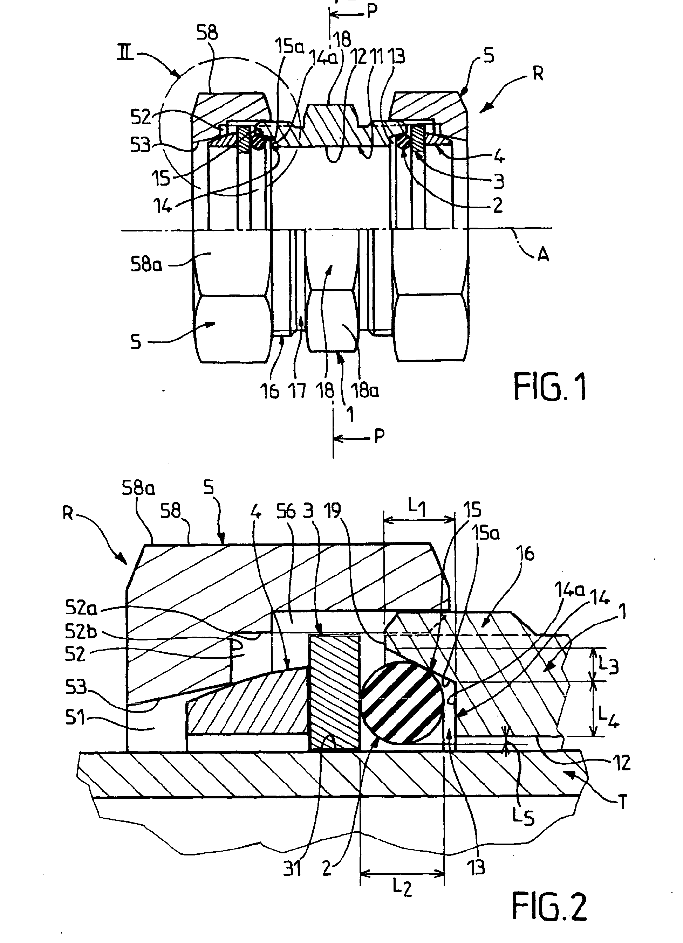

Selon le mode de réalisation illustré par la figure 1, le système de raccordement R est composé d'un corps tubulaire 1 qui comporte un plan médian transversal de symétrie P et deux joints d'étanchéité 2, deux rondelles d'appui 3, deux bagues fendues 4 et deux écrous 5 qui sont disposés symétriquement par rapport audit plan de symétrie P.

D'après la figure 1, le corps 1 est une pièce sensiblement tubulaire présentant un alésage 11 traversant longitudinal.

L'alésage 11 se compose de deux parties : une partie cylindrique interne 12 et un logement interne 13 annulaire à chaque extrémité dudit corps 1.

Le logement interne 13 est composé de deux parties : un première portion interne 14 définie par l'épaulement annulaire 14a et une deuxième portion externe 15 définie par une partie tronconique 15a.

La partie cylindrique 12 présente un diamètre interne constant inférieur au diamètre minimal de la partie tronconique 15a.

La partie tronconique 15a a un diamètre radialement croissant vers l'extérieur dudit corps 1, la portion interne 14 formant la petite base du tronc de cône.

L'épaulement annulaire 14a est formé par une surface radiale reliant l'extrémité externe de la partie cylindrique 12 à l'extrémité interne de la partie tronconique 15a.

La surface radialement externe du corps 1 présente un filetage externe 16 à chaque extrémité dudit corps 1, une partie centrale 18 et une rainure annulaire 17 située de part et d'autre de la partie centrale 18.

La partie centrale 18 présente un diamètre externe supérieur à celui du filetage 16. La partie centrale 18 présente une surface radialement externe globalement polyédrique à six facettes 18a.

Selon la figure 2, le logement interne 13 présente une profondeur axiale L1 et une hauteur radiale qui croît continûment de la valeur L4 (hauteur de la portion interne 14) à la valeur L3+L4 (L3 étant la hauteur radiale de la portion externe 15).

L'extrémité de la portion externe 15 du logement interne 13 est reliée à la base du filetage 16 par une surface d'extrémité 19 du corps 1 qui présente une surface globalement annulaire dans un sens radial.

Le corps 1 est par exemple constitué d'acier inoxydable.

La forme du logement interne 13 peut varier. Il peut présenter par exemple à la face d'une partie tronconique 15a, une partie évasée avec un diamètre radialement croissant vers l'extérieur dudit corps 1 selon un profil convexe ou concave. Il peut également présenter une partie interne 14 inclinée ou concave au lieu d'une surface radiale.

Ainsi, dans un corps 1 selon l'invention, la partie cylindrique 12 est destinée à accueillir les extrémités de pièces tubulaires T et le logement interne 13 du corps 1 est destiné à accueillir le joint d'étanchéité 2.

Le filetage externe 16 est destiné à coopérer avec l'écrou 5 lors du vissage de l'écrou autour du corps 1.

Dans ce mode de réalisation, la partie centrale 18 sert à la préhension du corps 1 et notamment à l'immobilisation du corps 1 pendant le vissage des écrous 5 par une clé plate par exemple ou tout autre outillage classique qui peut enserrer des facettes 18a opposées afin d'immobiliser ledit corps 1. Les facettes 18a servent alors de moyens de préhension du corps 1.

Le joint d'étanchéité 2 présente une forme globalement annulaire et une section circulaire. Il pourrait cependant présenter une autre forme de section, par exemple elliptique.

Il présente un diamètre externe maximal inférieur ou égal au diamètre maximal de ladite partie tronconique 15a du logement interne 13.

Comme illustré sur la figure 2, le diamètre interne du joint d'étanchéité 2 est inférieur au diamètre interne minimal dudit corps 1 d'un jeu L5. Bien entendu, il pourrait aussi être égal au diamètre interne du corps 1. En outre, l'épaisseur axiale qui correspond au diamètre L2 du joint d'étanchéité 2 est supérieure à la profondeur axiale L1 dudit logement interne 13 du corps. Le diamètre interne du joint d'étanchéité 2 au repos est supérieur au diamètre externe de l'extrémité tubulaire T.

Le joint d'étanchéité 2 est constitué par exemple d'élastomère fluoré (FPM) mais il peut également être constitué d'un caoutchouc ou de tout autre élastomère (EPDM par exemple).

Du fait qu'au repos, l'épaisseur axiale du joint d'étanchéité 2 est supérieure à la profondeur axiale L1 du logement interne 13 et du fait que le diamètre interne du joint d'étanchéité 2 est inférieur ou égal au diamètre interne minimal dudit corps 1, le joint d'étanchéité 2 ne peut, au repos ou à l'état pré-assemblé, être entièrement logé dans ledit logement interne 13. En outre, du fait que le diamètre interne du joint d'étanchéité 2 est supérieur ou égal au diamètre interne minimal de la rondelle 3 et que le diamètre interne de la rondelle 3 est supérieur au diamètre externe des pièces tubulaires T, le joint d'étanchéité 2 peut glisser sans frottement le long des pièces tubulaires T, et être monté sur lesdites pièces tubulaires T, directement inclus dans le système de raccordement R sous forme pré-assemblée, comme expliqué en détail ci-après. Bien entendu, au sens de l'invention, l'expression « supérieur ou égal » ou « inférieur ou égal » comprend les valeurs voisines au diamètre visé, aux tolérances de fabrication près.

La rondelle d'appui 3 a globalement la forme d'un disque présentant un alésage central 31.

Le diamètre interne de l'alésage central 31 de la rondelle d'appui 3 est inférieur ou égal au diamètre interne du corps 1. Selon la figure 2, le diamètre interne de l'alésage central 31 de la rondelle d'appui 3 est légèrement supérieur au diamètre externe de la pièce tubulaire T. Le diamètre externe de la rondelle d'appui 3 est inférieur au diamètre interne du logement interne 52 de l'écrou 5 et supérieur au diamètre maximal de la partie tronconique 15a du corps 1.

La rondelle d'appui 3 est avantageusement constituée d'acier inoxydable.

Dans ce mode de réalisation, du fait que le diamètre radialement externe de la rondelle d'appui 3 est inférieur au diamètre interne de logement interne 52 de l'écrou 5 lui permet de se déplacer librement dans le logement interne 52 de l'écrou 5.

En outre, son diamètre interne étant inférieur ou égal au diamètre interne du corps 1 mais légèrement supérieur au diamètre externe des pièces tubulaires T, la rondelle d'appui 3 peut librement glisser le long des pièces tubulaires T et s'affranchir des tolérances de fabrication des pièces tubulaires T.

Enfin, du fait que le diamètre radialement externe de la rondelle d'appui 3 est supérieur au diamètre minimal de la surface d'extrémité du corps 1 permet à la rondelle d'appui 3 de venir en butée contre la surface d'extrémité 19 du corps 1, sans pénétrer dans le logement interne 13 du corps 1.

La bague fendue 4, de forme globalement annulaire, présente une fente longitudinale traversante non visible sur les figures.

La surface radialement externe de la bague fendue 4 est décroissante vers l'extérieur selon un profil arrondi ou conique.

Selon les figures 1 et 2, au repos, le diamètre interne de la bague fendue 4 est légèrement plus important que celui du corps 1, et donc bien plus important que le diamètre externe de la pièce tubulaire T.

La bague fendue 4 est avantageusement constituée d'acier inoxydable.

La forme de la bague fendue 4 peut varier, elle peut présenter par exemple la forme d'un jonc rond ouvert.

La fente longitudinale confère à la bague fendue 4 une variabilité de son diamètre. Avantageusement, le diamètre interne minimal, atteint lorsque les bords délimitant la fente longitudinale se rejoignent, doit être inférieur au diamètre externe des pièces tubulaires T pour que la bague fendue 4, écrasée lors du serrage axial, puisse entrer en contact avec la surface externe des pièces tubulaires T et servir d'élément de fixation du système de raccordement R.

L'écrou 5 est une pièce sensiblement tubulaire présentant un alésage 51 traversant longitudinal.

L'alésage 51 comporte deux parties : un logement interne 52 et une partie radialement interne formant came 53. Le logement interne 52 est composé de deux parties : une partie cylindrique 52a et un épaulement annulaire externe 52b.

La partie cylindrique 52a présente un diamètre interne constant supérieur au diamètre maximal du joint d'étanchéité 2, de la rondelle d'appui 3 et de la bague fendue 4. La partie la plus interne de la partie cylindrique 52a présente un taraudage interne 56.

La partie radialement interne formant came 53 a un diamètre radialement décroissant vers l'extérieur dudit écrou 5 selon un profil droit. En variante, ce profil peut être convexe ou concave.

L'épaulement annulaire 52b est formé par la surface reliant l'extrémité externe de la partie cylindrique 52a, à l'extrémité interne de la partie radialement interne formant came 53. Le diamètre interne maximal de la partie radialement interne formant came 53 est, de préférence, inférieur au diamètre externe maximal de la bague fendue 4.

La surface radialement externe 58 de l'écrou 5 est globalement polyédrique à six facettes 58a. Le diamètre externe de l'écrou 5 est supérieur au diamètre de tous les autres éléments composant le système de raccordement R.

L'écrou 5 est, par exemple, constitué d'acier inoxydable. Il peut en variante, être constitué d'un autre matériau peu déformable ou d'un autre métal (compatible avec la matière de la rondelle d'appui 3 et que la bague fendue 4).

Ainsi, le logement interne 52 est destiné à accueillir, comme décrit précédemment, la bague fendue 4, la rondelle d'appui 3 et le joint d'étanchéité 2. La partie radialement interne formant came 53 est quant à elle destinée, lors du vissage de l'écrou 5 autour du corps 1, à transmettre à la bague fendue 4, en repoussant sa surface radialement externe, un mouvement de translation axiale en direction du corps 1, une fois la partie radialement interne formant came 53 en appui contre la bague fendue 4.

Le taraudage interne 56 coopère avec le filetage externe 16 du corps lors du vissage de l'écrou autour du corps 1. La surface radialement externe 58 sert à la préhension de l'écrou 5 et notamment à son vissage par une clé plate par exemple ou tout autre outillage classique qui peut enserrer des facettes 58a opposées. Les facettes 58a servent alors de moyens de préhension de l'écrou 5.

La figure 2 illustre le système de raccordement R à l'état pré-assemblé monté sur une pièce tubulaire T.

Dans cet état, l'extrémité externe du filetage externe 16 du corps 1 coopère avec l'extrémité interne du taraudage interne 56 de l'écrou 5.

Le joint d'étanchéité 2 est en appui, dans un état peu ou pas déformé, contre la partie tronconique 15a du logement interne 13 du corps 1 et contre la surface d'extrémité interne de la rondelle d'appui 3. Comme décrit précédemment, le joint d'étanchéité est seulement partiellement reçu dans le logement interne 13.

La bague fendue 4 est maintenue en appui entre la surface d'extrémité externe de la rondelle d'appui 3 et la partie radialement interne formant came 53 au niveau de son diamètre interne maximal.

Dans cet état, d'après la figure 2, comme tous les éléments du système de raccordement R présentent un diamètre interne supérieur au diamètre externe maximal de la pièce tubulaire T, ledit système R peut être aisément monté par glissement le long de la surface externe de la pièce tubulaire T.

De plus, grâce à cette caractéristique, le système peut accueillir et tolère des pièces tubulaires qui, de manière classique dans le commerce, présentent une certaine variabilité de diamètre externe.

Enfin, dans cet état, les écrous 5 sont suffisamment vissés sur le corps 1 pour que le système de raccordement R forme un ensemble solidaire et ne risque pas de se désassembler lors du montage évitant ainsi tout risque de perte de pièces. En outre, cet ensemble est dans un état de pré-serrage évitant tout cliquetis lors de sa manipulation.

Lors du pré-serrage axial des écrous 5, la partie radialement interne formant came 53 transmet à la bague fendue 4 un mouvement de translation axiale en direction du corps 1. Ce mouvement de translation axiale est transmis par la bague fendue 4 à la rondelle d'appui 3, puis par la rondelle d'appui 3 au joint d'étanchéité 2. Ensuite, le joint d'étanchéité 2 entre en contact, dans un premier temps sans se déformer, avec la partie tronconique 15a du logement interne 13 du corps 1. A ce moment, le système de raccordement R est à l'état pré-assemblé précédemment décrit.

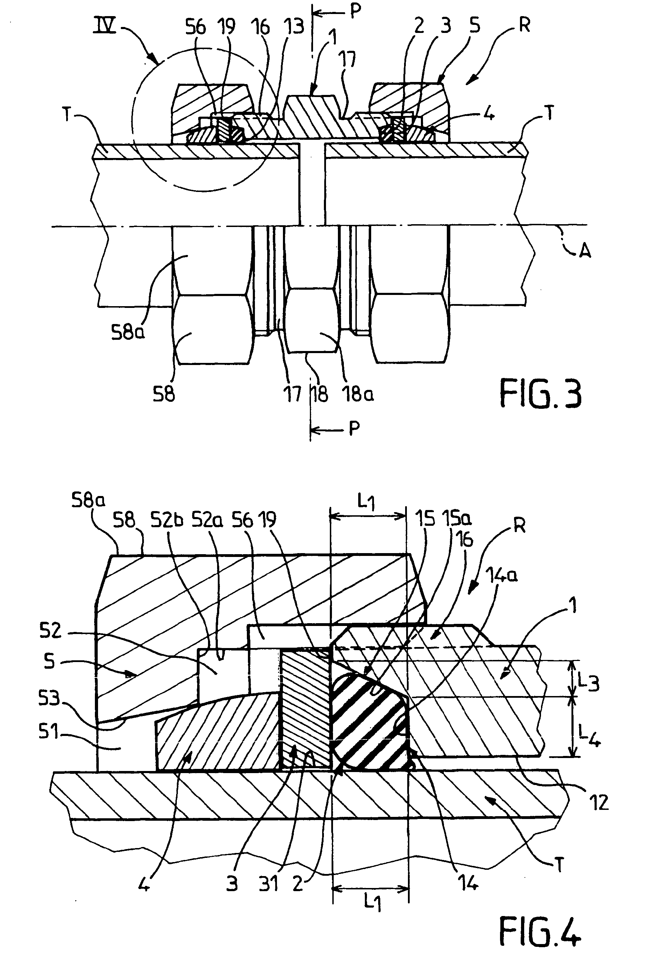

La figure 3 illustre le système de raccordement R après montage sur deux pièces tubulaires T et serrage des écrous 5. Selon la figure 4, une plus grande partie du filetage externe 16 du corps 1 coopère avec le taraudage interne 56 de l'écrou 5 car ce dernier a été vissé davantage autour du corps 1.

La rondelle d'appui 3 vient alors en butée contre la surface d'extrémité 19 du corps 1.

D'après la figure 4, le joint d'étanchéité 2 est alors complètement compris et enfermé dans le logement 13 du corps 1. Il est déformé car son épaisseur axiale est réduite à la profondeur axiale L1 du logement interne 13, son diamètre interne diminue jusqu'au diamètre externe de la pièce tubulaire T et sa hauteur radiale est supérieure à son diamètre au repos L2. En outre, la surface externe du joint d'étanchéité 2 s'adapte globalement à la surface interne du logement interne 13.

Lors de l'étape de vissage, le mouvement de translation axiale fourni par la pièce formant came 53 est transmis au joint d'étanchéité 2 par l'intermédiaire des pièces déjà en appui les unes contre les autres, étant successivement la bague fendue 4 et la rondelle d'appui 3. Le joint d'étanchéité 2 a alors tendance à se déformer puis fluer vers l'épaulement annulaire 14a et entre la surface externe de la pièce tubulaire T et l'alésage 11 du corps 1, ce qui confère une grande étanchéité au système de raccordement R. La déformation est maximale lorsque la rondelle d'appui 3 est en butée contre la surface d'extrémité 19 du corps 1.

Si le serrage axial est poursuivi, le mouvement de translation axiale n'est plus transmis aux différents éléments du système de raccordement R car la rondelle d'appui 3 est alors en butée contre le corps 1. A ce moment, la partie radialement interne formant came 53 glisse sur la surface radialement externe de la bague fendue 4 ce qui se traduit en un rétrécissement radial de la bague fendue 4. Le rétrécissement radial de la bague fendue 4 est maximal lorsque la bague fendue 4 entre en appui contre la surface externe des pièces tubulaires T comme illustré sur la figure 4. A ce moment la bague fendue 4 joue un rôle de solidarisation mécanique du système de raccordement R par ancrage.

Ainsi, en réalisant le joint d'étanchéité 2 dans un matériau plus facilement déformable que le matériau constituant la bague fendue 4, la déformation du joint d'étanchéité s'effectue avant celle de la bague fendue 4 permettant ainsi, d'abord le positionnement adéquat du joint d'étanchéité 2 dans le logement interne 13 puis la solidarisation mécanique du système de raccordement R une fois l'étanchéité établie.

Il est bien entendu que la structure du système de raccordement R n'est pas limitée à une structure symétrique par rapport au plan médian transversal P du corps 1. En effet, le système de raccordement R peut présenter une structure asymétrique, par exemple reproduire seulement la moitié de la structure précédemment décrite délimitée par rapport au plan médian transversal P du corps 1.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de raccordement (R) destiné à raccorder au moins une pièce tubulaire (T), du type comportant :
• un corps (1) globalement tubulaire ayant un alésage (11) traversant s'étendant dans une direction dite axiale, apte à recevoir ladite pièce tubulaire (T) et présentant à une extrémité (19) un épaulement annulaire (14a), définissant un logement interne (13) débouchant radialement vers l'axe (A) du corps (1) et axialement vers l'extérieur, ledit corps (1) tubulaire présentant un filetage externe (16) destiné à coopérer avec au moins un écrou (5) ;
• un joint d'étanchéité (2) annulaire déformable apte à être reçu dans ledit logement (13);
• une rondelle d'appui (3) de diamètre externe supérieur au diamètre maximal dudit logement interne (13), ledit joint d'étanchéité (2) étant intercalé entre ledit épaulement annulaire (14a) et ladite rondelle d'appui (3);
• une bague fendue (4) de diamètre interne supérieur ou égal au diamètre interne minimal dudit corps (1) au repos, de façon que ladite rondelle d'appui (3) soit intercalée entre ladite bague fendue (4) et ledit joint d'étanchéité (2);
ledit écrou (5) étant apte à être vissé sur le filetage externe (16) dudit corps et comportant une partie radialement interne formant came (53) apte à coopérer avec ladite bague fendue (4) pour lui transmettre un mouvement de translation axiale et provoquer un rétrécissement radial de la bague fendue (4) ;
au repos, le diamètre interne dudit joint d'étanchéité (2) est supérieur au diamètre externe de ladite pièce tubulaire (T). en ce que ledit logement interne (13) se compose, dans la direction axiale, dudit épaulement annulaire (14a) formant fond et d'une deuxième portion externe (15) évasée, de préférence conique, et en ce que l'épaisseur radiale dudit joint d'étanchéité (2) est telle que ledit joint au repos dans le logement (13) n'entre pas en contact avec ledit épaulement annulaire (14a), de façon à engendrer une déformation dudit joint d'étanchéité (2) radiale vers l'axe (A) dudit corps (1) lorsque ledit joint d'étanchéité (2) est reçu à force dans ledit logement interne (13) sous l'effet du serrage dudit écrou (5);
**caractérisé en ce que** au repos, le diamètre interne dudit joint d'étanchéité (2) est supérieur ou égal au diamètre interne minimal de ladite rondelle (3), et le diamètre interne minimal du corps (1) est supérieur ou égal au diamètre interne minimal du joint d'étanchéité (2)

2. Système de raccordement selon la revendication 1 **caractérisé en ce que** ledit joint d'étanchéité (2) présente un diamètre externe maximal au plus égal au diamètre maximal dudit logement interne (13).

3. Système de raccordement selon l'une des revendications 1 ou 2, **caractérisé en ce que**, au repos, l'épaisseur axiale (L2) dudit joint d'étanchéité (2) est supérieure à la profondeur axiale (L1) dudit logement interne (13) du corps tubulaire (1).

4. Système de raccordement selon l'une des revendications 1 à 3, **caractérisé en ce que** le corps tubulaire (1) comporte un plan médian transversal de symétrie (P) et **en ce que** deux joints d'étanchéité (2), deux rondelles d'appui (3), deux bagues fendues (4) et deux écrous (5) sont disposés symétriquement par rapport audit plan de symétrie (P), permettant de raccorder deux pièces tubulaires (T).

5. Système de raccordement selon l'une des revendications 1 à 4, **caractérisé en ce que** ledit joint d'étanchéité (2) présente une dureté comprise entre 75 et 85 shore A et de préférence égale à 80 shore A.

6. Système de raccordement selon l'une des revendications 1 à 5, **caractérisé en ce que** ledit joint d'étanchéité (2) est constitué d'un élastomère synthétique.

7. Système de raccordement selon l'une des revendications 1 à 6, **caractérisé en ce que** les différents éléments dudit système, dont ledit corps (1), ledit (lesdits) joint(s) d'étanchéité (2), ladite (lesdites) rondelle(s) d'appui (3), ladite (lesdites) bague(s) fendue(s) (4) et ledit (lesdits) écrou(s) (5), sont pré-assemblés.

8. Système de raccordement selon la revendication 7, **caractérisé en ce que**, dans cet état pré-assemblé, la partie radialement interne formant came (53) dudit écrou (5), ladite bague fendue (4), ladite rondelle d'appui (3), ledit joint d'étanchéité (2) et ledit corps (1) sont successivement disposés, selon une direction axiale vers l'intérieur, en appui les uns contre les autres, ladite rondelle d'appui (3) n'étant pas en appui contre l'extrémité (19) dudit corps (1).

9. Procédé de montage d'un système de raccordement (R) selon l'une des revendications 7 ou 8, **caractérisé en ce qu**'il consiste à :
• glisser le système de raccordement (R) pré-assemblé le long de la surface externe de chaque pièce tubulaire (T) à raccorder ;
• serrer chaque écrou (5) de façon que sa partie radialement interne formant came (53) repousse axialement ledit joint d'étanchéité (2) dans le logement interne (13) jusqu'à provoquer une déformation radiale dudit joint d'étanchéité (2) afin que ledit joint d'étanchéité (2) soit en appui contre la surface externe de ladite pièce tubulaire (T) ;
• poursuivre le serrage de l'écrou (5) de façon que sa partie radialement interne formant came (53) glisse sur ladite bague fendue (4) jusqu'à provoquer son rétrécissement radial afin qu'elle vienne en appui contre la surface externe de ladite pièce tubulaire (T).

## Claims

1. Coupling system (R) intended to connect at least one tubular part (T), of the type comprising:
• a generally tubular body (1) having a through-bore (11) extending in a direction called the axial direction, capable of accommodating said tubular part (T) and having, at an end (19) an annular shoulder (14a) that defines an internal housing (13) emerging radially towards the axis (A) of the body (1) and axially towards the outside, said tubular body (1) having an external thread (16) intended to cooperate with at least one nut (5);
• a deformable annular seal (2) that can be accommodated in said housing (13);
• a bearing washer (3) of outside diameter greater than the maximum diameter of said internal housing (13), said seal (2) being inserted between said annular shoulder (14a) and said bearing washer (3); and
• a split ring (4) of inside diameter greater than or equal to the minimum inside diameter of said body (1) at rest, so that said bearing washer (3) is interposed between said split ring (4) and said seal (2) ;
said nut (5) being able to be screwed onto the external thread (16) of said body and having a radially internal cam-forming part (53) that can cooperate with said split ring (4) in order to transmit an axial translation movement thereto and to cause the split ring (4) to contract radially;
at rest, the inside diameter of said seal (2) is greater than the outside diameter of said tubular part (T), said internal housing (13) is composed, in the axial direction, of said annular shoulder (14a) forming a bottom and of a flared, preferably conical, external second portion (15), and the radial thickness of said seal (2) is such that said joint at rest in the housing shoulder (14a), so as to deform said seal (2) radially towards the axis (A) of said body (1) when said seal (2) is forcibly accommodated in said internal housing (13) under the effect of the tightening of said nut (5) ;
**characterized in that**, at rest, the inside diameter of said seal (2) is greater than or equal to the minimum inside diameter of said washer (3) and the minimum inside diameter of the body (1) is greater than or equal to the minimum inside diameter of the seal (2).

2. Coupling system according to Claim 1, **characterized in that** said seal (2) has a maximum outside diameter at most equal to the maximum diameter of said internal housing (13).

3. Coupling system according to either of Claims 1 and 2, **characterized in that**, at rest, the axial thickness (L₂) of said seal (2) is greater than the axial depth (L₁) of said internal housing (13) of the tubular body (1).

4. Coupling system according to one of Claims 1 to 3, **characterized in that** the tubular body (1) has a transverse mid-plane of symmetry (P) and **in that** two seals (2), two bearing washers (3), two split rings (4) and two nuts (5) are placed symmetrically with respect to said plane of symmetry (P), allowing two tubular parts (T) to be connected.

5. Coupling system according to one of Claims 1 to 4, **characterized in that** said seal (2) has a Shore A hardness of between 75 and 85 and preferably of 80.

6. Coupling system according to one of Claims 1 to 5, **characterized in that** said seal (2) consists of a synthetic elastomer.

7. Coupling system according to one of Claims 1 to 6, **characterized in that** the various elements of said system, including said body (1), said seal(s) (2), said bearing washer(s) (3), said split ring(s) (4) and said nut(s) (5), are preassembled.

8. Coupling system according to Claim 7, **characterized in that**, in this preassembled state, the radially internal cam-forming part (53) of said nut (5), said split ring (4), said bearing washer (3), said seal (2) and said body (1) are placed in succession, in an axial direction towards the inside, these bearing against one another, but said bearing washer (3) not bearing against the end (19) of said body (1).

9. Method of fitting a coupling system (R) according to either of Claims 7 and 8, **characterized in that** it consists in:
• sliding the preassembled coupling system (R) along the external surface of each tubular part (T) to be connected;
• tightening each nut (5) so that its radially internal cam-forming part (53) pushes said seal (2) axially into the internal housing (13) until said seal (2) is radially deformed so that said seal (2) bears against the external surface of said tubular part (T); and
• continuing to tighten the nut (5) so that its radially internal cam-forming part (53) slides over said split ring (4) until it contracts radially so that it bears against the external surface of said tubular part (T).

## Patentansprüche

1. Kupplungssystem (R) zum Anschließen wenigstens eines röhrenförmigen Bauteils (T), welches aufweist:
• einen insgesamt röhrenförmigen Körper (1), der eine in einer axialen Richtung verlaufende durchgehende Bohrung (11) aufweist, welcher das röhrenförmige Bauteil (T) aufnehmen kann und an einem Ende (19) eine ringförmige Schulter (14a) aufweist, welche eine innere Aufnahme (13) definiert, die sich radial in Richtung der Achse (A) der Körpers (1) und axial nach Außen öffnet, wobei der röhrenförmige Körper (1) ein Außengewinde (16) aufweist, welches mit wenigstens einer Mutter (5) zusammenwirken kann;
• eine verformbare ringförmige Dichtung (2), welche in die Aufnahme (13) eingesetzt werden kann;
• eine Unterlegscheibe (3) mit größerem Außendurchmesser als dem maximalen Durchmesser der inneren Aufnahme (13), wobei die Dichtung (2) zwischen der ringförmigen Schulter (14a) und der Unterlegscheibe (3) eingefügt ist;
• einen geschlitzten Ring (4) mit einem Innendurchmesser, der größer oder gleich dem minimalen Innendurchmesser des Körpers (1) im Ruhestand ist, so dass die Unterlegscheibe (3) zwischen dem geschlitzten Ring (4) und der Dichtung (2) eingefügt ist;
wobei die Mutter (5) auf das Außengewinde (16) des Körpers geschraubt werden kann und ein nockenartiges radiales inneres Teil (53) aufweist, das mit dem geschlitzten Ring (4) zusammenwirken kann, um ihn in eine axiale Translationsbewegung zu versetzen und eine radiale Verengung des geschlitzten Rings (4) zu bewirken;
wobei im Ruhezustand der Innendurchmesser der Dichtung (2) größer als der Außendurchmesser des röhrenförmigen Bauteils (T) ist und die innere Aufnahme (13) in axialer Richtung aus der einen Boden bildenden ringförmigen Schulter (14a) und einem zweiten äußern ausgestellten, vorzugsweise konischen Abschnitt (15) gebildet wird, und
wobei die radiale Dicke der Dichtung (2) so gewählt ist, dass die Dichtung im Ruhezustand in der Aufnahme (13) nicht in Kontakt mit der ringförmigen Schulter (14a) kommt, so dass eine radiale Verformung der Dichtung (2) in Richtung der Achse (A) des Körpers (1) erzeugt wird, wenn die Dichtung (2) unter der Klemmwirkung der Mutter (5) in die innere Aufnahme (13) gepresst wird;
**dadurch gekennzeichnet, dass** im Ruhezustand der Innendurchmesser der Dichtung (2) größer oder gleich dem minimalen Innendurchmesser der Scheibe (3) und der minimale Innendurchmesser der Körpers (1) größer oder gleich dem minimalen Innendurchmesser der Dichtung (2) sind.

2. Kupplungssystem gemäß Anspruch 1, **dadurch gekennzeichnet, dass** die Dichtung (2) einen maximalen Außendurchmesser aufweist, der höchstens gleich dem maximalen Durchmesser der inneren Aufnahme (13) ist.

3. Kupplungssystem gemäß einem der Ansprüche 1 oder 2, **dadurch gekennzeichnet, dass** im Ruhezustand die axiale Dicke (L2) der Dichtung (2) größer als die axiale Tiefe (L1) der inneren Aufnahme (13) des röhrenförmigen Körpers (1) ist.

4. Kupplungssystem gemäß einem der Ansprüche 1 bis 3, **dadurch gekennzeichnet, dass** der röhrenförmige Körper (1) eine mittlere transversale Symmetrieebene (P) aufweist und **dadurch**, dass zwei Dichtungen (2), zwei Unterlegscheiben (3), zwei geschlitzte Ringe (4) und zwei Muttern (5) symmetrisch bezüglich der Symmetrieebene (P) angeordnet sind, was die Verbindung von zwei röhrenförmigen Bauteilen (T) ermöglicht.

5. Kupplungssystem gemäß einem der Ansprüche 1 bis 4, **dadurch gekennzeichnet, dass** die Dichtung (2) eine Härte aufweist die zwischen 75 und 85 Shore A und vorzugsweise bei 80 Shore A liegt.

6. Kupplungssystem gemäß einem der Ansprüche 1 bis 5, **dadurch gekennzeichnet, dass** die Dichtung (2) aus einem synthetischen Elastomermaterial besteht.

7. Kupplungssystem gemäß einem der Ansprüche 1 bis 6, **dadurch gekennzeichnet, dass** die verschiedenen Bauelemente des Systems, als da wären der Körper (1), der (die) Dichtung(en) (2), die Unterlegscheibe(en) (3), der (die) geschlitzte(en) Ring(e) (4) und die Mutter(n) (5) vormontiert sind.

8. Kupplungssystem gemäß Anspruch 7, **dadurch gekennzeichnet, dass** in dem vormontierten Zustand das nockenartige radiale innere Teil (53) der Mutter (5), der geschlitzte Ring (4), die Unterlegscheibe (3), die Dichtung (2) und der Körper (1) nacheinander in einer ins Innere weisenden axialen Richtung in Anlage gegeneinander angeordnet sind, wobei die Unterlegscheibe (3) sich nicht in Anlage gegen das Ende (19) des Körpers (1) befindet.

9. Montageverfahren für ein Kupplungssystem (R) gemäß einem der Ansprüche 7 oder 8, **dadurch gekennzeichnet, dass** es aus den Schritten besteht:
• Verschieben des vormontierten Kupplungssystems (R) entlang der Außenfläche jedes anzuschließenden röhrenförmigen Bauteils (T);
• Festklemmen jeder Mutter (5), so dass deren nockenartiges radiales inneres Teil (53) die Dichtung (2) in die innere Aufnahme (13) zurückstößt, bis eine radiale Verformung der Dichtung (2) hervorgerufen wird, damit die Dichtung (2) gegen die Außenfläche des röhrenförmigen Bauteils (T) in Anlage kommt;
• Fortsetzen des Festklemmens der Mutter (5), so dass deren nockenartiges radiales inneres Teil (53) auf den geschlitzten Ring (4) gleitet, um dessen Verengung zu bewirken, damit er in Anlage gegen die Außenfläche des röhrenförmigen Bauteils (T) kommt.
